# EUROPÄISCHE PATENTSCHRIFT

(11) **EP 3 092 357 B1**
(45) Veröffentlichungstag und Bekanntmachung des Hinweises auf die Patenterteilung: **01.04.2020**
(21) Anmeldenummer: 14806216.9
(22) Anmeldetag: 25.11.2014
(51) Int. Cl.: E04H 12/08, F03D 13/20, E04H 12/12, E04H 12/16, E04H 12/34

(54) **ANORDNUNG MIT EINEM BETONFUNDAMENT UND EINEM TURM UND VERFAHREN ZUM ERRICHTEN EINES TURMS**
ARRANGEMENT WITH A CONCRETE FOUNDATION AND A TOWER AND METHOD FOR ERECTING A TOWER
ENSEMBLE COMPRENANT UNE FONDATION EN BÉTON ET UNE TOUR ET PROCÉDÉ D'ÉRECTION D'UNE TOUR

(30) Priorität: 18.12.2013 DE 102013226536
(43) Veröffentlichungstag der Anmeldung: 16.11.2016
(73) Patentinhaber: Wobben Properties GmbH, 26607 Aurich (DE)
(72) Erfinder: COORDES, Thomas, 26632 Ihlow (DE)
(74) Vertreter: Eisenführ Speiser
(86) Internationale Anmeldenummer: PCT/EP2014/075541
(87) Internationale Veröffentlichungsnummer: WO 2015/090861

(56) Entgegenhaltungen:
- EP-A2- 1 262 614
- CN-U- 201 818 097
- DE-B3- 10 230 273

## Beschreibung

Die Erfindung betrifft eine Anordnung mit einem Betonfundament und einem Turm zum Tragen einer Gondel einer Windenergieanlage gemäß dem Oberbegriff des Anspruchs 1 und ein Verfahren zum Errichten eines Turmes einer Windenergieanlage gemäß dem Oberbegriff des Anspruchs 13 sowie eine Windenergieanlage umfassend eine Anordnung nach Anspruch 14.

Anordnungen mit einem Betonfundament und einem Turm für eine Windenergieanlage sind grundsätzlich aus dem Stand der Technik bekannt. Typischerweise ist ein Betonfundament vorgesehen, auf welchem mehrere Turmsegmente angeordnet und verbunden werden, wobei die einzelnen Turmsegmente üblicherweise als Ringe oder Ringsegmente vorgefertigt, auf die Baustelle transportiert und dort miteinander verbunden werden. Bekannt ist beispielsweise einzelne Betonturmsegmente zu verspannen oder Stahlturmsegmente zu verschrauben. Hierbei hat sich gezeigt, dass es einen sehr hohen Bedarf an Verbindungsmitteln gibt, was nicht nur zu einem hohen Materialeinsatz führt, sondern auch aus statischer Sicht ungünstig ist.

Wünschenswert wäre es deshalb, eine Anordnung mit einem Betonfundament und einem Turm für eine Windenergieanlage bereitzustellen, wobei für den Turm nur eine geringe Anzahl von Turmsegmenten und Spannmitteln verwendet werden und der Turm gleichzeitig gute statische Eigenschaften aufweist.

Aus dem Stand der Technik sind verschiedene Lösungen für Trage- oder Turmanordnungen für Windenergieanlagen bekannt.

Beispielsweise ist aus dem Dokument DE 10 2011 090 194 A1 ein turmförmiges Tragwerk mit mehreren Betonelementen und einem Stahlmast bekannt. Die mehreren Betonelemente werden auf einem Fundament übereinander angeordnet und verbunden, wobei die unteren Betonelemente zunächst verspannt werden und anschließend der Stahlmast mit Hilfe von Schrauben auf den verspannten Betonelementen angeordnet wird.

Auch aus dem Dokument DE 10 2010 015 075 A1 ist ein Windenergieanlagenturm bekannt, der aus einer Vielzahl von übereinander angeordneten Betonturmsegmenten besteht.

Das Deutsche Patent- und Markenamt hat zur Sache folgenden Dokumente recherchiert: WO 2011/058158 A1, DE 102 30 273 B3, WO 2008/000265 A1, JP 2005180082A, WO 2010/006659 A1, EP 1262614 A2, JP 2009019550A und KR 1020120077650A.

EP 1 262 614 A2 beschreibt eine Anordnung gemäß der eingangs genannten Art, nämlich ein Turmbauwerk aus Spannbeton mit einem Fundament, wenigstens einer auf dem Fundament errichteten Turmwandung mit ringförmigem Querschnitt und einem davon umfassten, innenliegenden Hohlraum und einer auf die Turmwandung aufgesetzten Turmkrone, die aus Beton oder Stahl gebildet sein kann. Die Turmkrone kann auch als Adaptersegment dienen, an dem ein zusätzlicher Stahlmast befestigbar ist. Weiterhin kann die Turmkrone als Stahlmast ausgebildet sein.

An der Turmkrone sind über deren Umfang verteilt eine Vielzahl an Kopflagerelementen angeordnet, in denen die Spannglieder verankert sind. Die Spannglieder erstrecken sich von dem Kopflagerelement an der Turmkrone entlang der Innenseite der Turmwandung bis in einen sogenannten Spannkeller im Fundament. Hier sind eine Vielzahl von Fußlagerelementen angeordnet.

DE 102 30 273 B3 beschreibt die Verbindung zweier Teile eines rohrförmigen Turms einer Windkraftanlage. Der untere Teil des Turms besteht aus Spannbeton und der obere Teil aus Stahl. Der obere Teil aus Stahl, ein Verbindungsstück und der untere Teil aus Spannbeton sind rohrförmig ausgebildet. Das Verbindungsstück ist oben mit einem Flansch versehen, der mit der Wand ein T bildet. Auf der einen Seite des Flanschs wird das Verbindungsstück mit dem Flansch des oberen Stahlteils durch Schrauben verbunden. An der anderen Seite des Flanschs bezogen auf die Wand werden Vorspannkräfte durch Spannglieder, die außerhalb des Verbindungsstücks in die Wand des Spannbetonteils des Turms geführt werden, eingeleitet. Die Spannglieder werden horizontal in gleichen Abständen auf den ringförmigen Flansch verteilt

Auch bei den aus dem Stand der Technik bekannten Lösungen werden jedoch eine große Anzahl von Turmsegmenten und Spannmitteln eingesetzt, was zu einem hohen Kosten- und Materialaufwand führt.

An dieser Stelle setzt die Erfindung an, deren Aufgabe es ist, eine verbesserte Anordnung mit einem Betonfundament und einem Turm für eine Windenergieanlage zur Verfügung zu stellen, die hinsichtlich des Standes der Technik verbessert ist, wenigstens aber an eines der oben genannten Probleme adressiert ist. Insbesondere ist es die Aufgabe der Erfindung, eine Anordnung mit einem Betonfundament und einem Turm für eine Windenergieanlage sowie ein Verfahren zur Errichtung eines Turmes für eine Windenergieanlage bereitzustellen, bei welcher/welchem eine geringe Anzahl von Turmsegmenten und Verbindungselementen zwischen Fundament und Turmsegmenten benötigt werden, wobei der Turm gleichzeitig hinreichend gute statische Eigenschaften aufweist, um eine Gondel einer Windenergieanlage zu tragen. Darüberhinaus ist es zumindest aber Aufgabe der Erfindung eine Alternative zu einer aus dem Stand der Technik bekannten Lösung vorzuschlagen.

Diese Aufgabe wird erfindungsgemäß mit der Anordnung nach Anspruch 1 und einem Verfahren zur Errichtung eines Turmes nach Anspruch 13 sowie eine Windenergieanlage nach Anspruch 14 gelöst.

Die Erfindung umfasst dabei den Gedanken einer Anordnung mit einem Betonfundament und einem Turm zum Tragen einer Gondel einer Windenergieanlage, wobei der Turm eine Anzahl von Turmsegmenten umfasst, die entlang einer Turmachse angeordnet sind und zumindest ein oberstes Turmsegment einen Kopfflansch und einen Fußflansch umfasst, wobei ein oberstes Turmsegment der Anzahl von Turmsegmenten als ein Stahlelement gebildet ist; und eine Anzahl von Spann- oder Zuglitzen das Betonfundament mit dem Kopfflansch des obersten Turmsegmentes unter Zugspannung verspannt.

Weiter umfasst die Erfindung den Gedanken eines Verfahren zum Errichten eines Turms zum Tragen einer Gondel einer Windenergieanlage, wobei das Verfahren die folgenden Schritte umfasst, nämlich ein Aufsetzen eines ersten Turmsegmentes einer Anzahl von Turmsegmenten auf einem Betonfundament; Verbinden des Betonfundamentes und des ersten Turmsegmentes mittels lösbarer Verbindungsmittel; Verspannen des Betonfundamentes mit einem obersten Turmsegment der Anzahl von Turmsegmenten mittels einer Anzahl von Spann- oder Zuglitzen, wobei die Spann- oder Zuglitzen das Betonfundament und dem Kopfflansch des obersten Turmsegmentes verbinden, und das oberste Turmsegment als ein Stahlelement gebildet ist.

Darüber hinaus umfasst die Erfindung eine Windenergieanlage mit einem Turm, einem Betonfundament und einer Gondel, wobei an der Gondel ein Rotor mit drei Rotorblättern angeordnet ist, und der Rotor im Betrieb der Windenergieanlage durch Wind in eine Drehbewegung ausführt und einen Generator antreibt, wobei der Turm und das Betonfundament eine erfindungsgemäße Anordnung bilden.

Im Folgenden wird das Konzept der Erfindung beispielhaft - ohne diese dabei einzuschränken - beschrieben. Die Erfindung betrifft eine Anordnung, insbesondere eine zylinder- und/oder kegelförmige, turmartige hohle Trageanordnung, mit einer Anzahl i von Turmsegmenten, wobei i die Zahlenwerte 1, 2, ..., n annehmen kann. Die Turmsegmente, insbesondere das oberste Turmsegment ist dabei mittels Spann- oder Zuglitzen mit einem Betonfundament der Anordnung verspannt, wobei das oberste Turmsegment ein Stahlelement ist und die Spann- oder Zuglitzen einen Flansch am oberen Ende des obersten Turmsegmentes mit dem Betonfundament verbinden. Im Gegensatz zu konventionell verschraubten Turmsegmenten benötigt man bei der erfindungsgemäßen Anordnung deutlich weniger Befestigungs- beziehungsweise Verbindungsmittel, was zu einem geringeren Materialeinsatz und damit zu einem Kostenvorteil führt. Darüber wurde erkannt, dass es mit der Erfindung möglich ist, eine Anordnung bereitzustellen, die gute statische Eigenschaften aufweist, obwohl eine derartige Verspannung auch eine zusätzliche Last im Turm erzeugt.

Grundsätzlich kann eine Anzahl von einem oder mehreren Turmsegmenten verspannt werden.

Bevorzugt sieht eine Ausgestaltung vor, dass die Anordnung, insbesondere die Anzahl von Turmsegmenten, ausschließlich ein einziges Turmsegment umfasst, das mit dem Fußflansch auf dem Betonfundament angeordnet ist. Bei dieser Ausgestaltungsform wird zur Bildung des Turmes lediglich ein einziges Turmsegment (i = 1) verwendet, welches dann zugleich das oberste und unterste (Stahl-)Turmsegment bildet, das dann über die Spann- oder Zuglitzen mit dem Betonfundament verspannt ist. Erfindungsgemäß kann bei dieser Ausgestaltungsform der Turm ausschließlich aus einem einzigen Stahlturmsegment gebildet werden, so dass der Turm ausschließlich aus Stahl gebildet ist (Stahlturm), wobei hier zumindest das einzige Stahlturmsegment über Spann- oder Zuglitzen mit dem Betonfundament verspannt ist. Unter dem Turmsegment wird ein zylinderund/oder kegelförmiger Ring oder Ringsegment verstanden, der zur Bildung des Turms entlang der Turmachse angeordnet wird. Die Gondel der Windenergieanlage wird vorliegend ausdrücklich nicht als Turmsegment verstanden.

Bei einer zweckmäßigen Ausgestaltung kann vorgesehen sein, dass die Anordnung mehrere Turmsegmente umfasst, die entlang der Turmachse übereinander auf dem Betonfundament angeordnet sind. Bei dieser Ausgestaltungsform umfasst die Anordnung insgesamt eine Anzahl i Turmsegmente, wobei i ≥ 2 ist. Bevorzugt wird der Turm mittels zwei, drei, vier oder fünf Turmsegmenten gebildet, wobei dann jeweils das in Richtung der Turmachse oberste Turmsegmente ein Stahlsegment ist, das über die Spann- oder Zuglitzen mit dem Betonfundament verspannt ist. Erfindungsgemäß kann der Turm auch aus mehreren Stahlturmsegmenten gebildet werden, so dass der Turm ausschließlich aus Stahl gebildet ist (Stahlturm), wobei auch hier zumindest das oberste Stahlturmsegment über Spann- oder Zuglitzen mit dem Betonfundament verspannt ist. Unter Turmsegmenten werden zylinder- und/oder kegelförmige Ringe oder Ringsegmente verstanden, die zur Bildung des Turms entlang der Turmachse übereinander angeordnet werden. Die Gondel der Windenergieanlage wird vorliegend ausdrücklich nicht als Turmsegment verstanden.

Diese und weitere bevorzugte Ausgestaltungsformen der Erfindung sind Gegenstand der Unteransprüche und präzisieren sowohl die Anordnung als auch das Verfahren zur Herstellung eines Turmes und zur Herstellung einer Windenergieanlage. Insbesondere sind bevorzugte Weiterbildungen Gegenstand der Unteransprüche und geben im Einzelnen vorteilhafte Möglichkeiten an, wie die/das oben erläuterte Anordnung/Verfahren im Rahmen der Aufgabenstellung sowie hinsichtlich weiterer Vorteile zu realisieren beziehungsweise auszugestalten ist.

Eine bevorzugte Weiterbildung sieht vor, dass zehn, bevorzugt sieben und noch mehr bevorzugt fünf Spann- oder Zuglitzen das Betonfundament mit dem Kopfflansch des obersten Turmsegmentes unter Zugspannung verspannen und die jeweiligen Spannoder Zuglitzen äquidistanten Abständen zu einander verteilt sind. Im Gegensatz zu konventionellen Turmsegmenten, die verschraubt sind, werden also statt typischerweise 150 Schrauben; deutlich weniger Spann- oder Zuglitzen, also eine ein- oder zweistellige Anzahl von Spann- oder Zuglitzen benötigt, um den Turm zu verspannen. Die mehreren Spann- oder Zuglitzen werden dabei umfänglich mit äquidistanten Abständen zu einander im Turm verteilt, so dass sich die Last gleichmäßig auf die jeweilige Anzahl von Spannoder Zuglitzen verteilt.

Bei einer vorteilhaften Ausgestaltung kann vorgesehen sein, dass der Kopfflansch und/oder der Fußflansch zumindest eines der Turmsegmente Bohrungen umfasst. Bei dieser Ausgestaltungsform ist es vorgesehen, dass die Spann- oder Zuglitzen durch die Bohrungen im Kopf- oder Fußflansch der Turmsegmente geführt und verspannt werden. In wiederum einer anderer Ausgestaltungsform, beispielsweise wenn der Turm mittels mehrerer Turmsegmente gebildet ist, kann es auch vorgesehen sein, dass die Spannoder Zuglitzen nur durch bestimmte Bohrungen der jeweiligen Turmsegmente geführt werden, beispielsweise nur durch die Bohrungen des Fußflansches des untersten Turmsegmentes und die Bohrungen im Kopfflansch des obersten Turmsegmentes. An den anderen der anderen Turmsegmente werden die Spann- oder Zuglitzen vorbeigeführt. Auch kann es dann vorgesehen sein, dass nur das oberste und das unterste Turmsegment solche Führungsbohrungen aufweist. Ohne Einschränkung können auch weitere Kombinationen vorgesehen sein.

Eine bevorzugte Weiterbildung sieht vor, dass der Durchmesser mindestens eines der Turmsegmente sich entlang der Turmachse nach oben verkleinert, wobei zumindest ein Teil der Außenseite des Turmsegmentes mit der Turmachse einen Winkel zwischen einem Grad (1°) und zehn Grad (10°) einschließt. Hierbei ist es in besonderer Weise vorgesehen, dass der Turm, insbesondere ein Turmsegment, sich in vertikaler Richtung entlang der Turmachse nach oben verjüngt. Bevorzugt schließt die Außenseite eines Turmsegmentes mit der Turmachse einen Winkel von fünf Grad (5°) und noch mehr bevorzugt einen Winkel im Bereich zwischen einem und zwei Grad (1° bis 2°) ein. Hierbei kann es auch vorgesehen sein, dass ein Turmsegment zunächst einen zylinderförmigen Abschnitt und dann einen (abgeknickten) kegelförmigen Abschnitt aufweist, wobei dann nur die Oberfläche des kegelförmigen Turmsegmentabschnittes mit der Turmachse einen der oben genannten Winkel einschließt. Ebenso kann es vorgesehen sein, insbesondere wenn der Turm mit mehreren Turmsegmenten gebildet ist, dass die einzelnen Turmsegmente verschiedene Winkel aufweisen, beispielsweise ein unterstes Turmsegment einen Winkel von fünf Grad (5°) und das entlang der Turmachse darüber angeordnete Turmsegmente einen Winkel von zwei Grad (2°), so dass eine abgestufte Verjüngung des Turmes vorliegt.

Eine nicht zur Erfindung gehörige Variante kann vorsehen, dass zumindest eines der Anzahl der Turmsegmente, insbesondere das unterste Turmsegment, welches benachbart zum Betonfundament angeordnet ist, ein Betonsegment ist. Bei dieser Ausgestaltungsform handelt es sich um einen sogenannten Hybridturm, bei dem beispielsweise ein unterstes oder mehrere unterste Turmsegment(e) als Betonsegment(e) und das oberste oder mehrere oberste Turmsegment(e) als ein Stahlelement(e) gebildet ist/sind, und das oberste Stahlelement, insbesondere der Kopfflansch des obersten Stahlelementes, über Spann- oder Zuglitzen mit dem Betonfundament verspannt ist.

Bevorzugt sieht eine Ausgestaltung vor, dass zumindest der Kopfflansch und/oder der Fußflansch des obersten Turmsegmentes L-förmig oder T-förmig gebildet sind. Hierbei ist es in besonderer Weise vorgesehen, den Kopfflansch des obersten und/oder den Fußflansch des untersten Turmsegmentes L-förmig oder T-förmig auszubilden, so dass es möglich ist, in dem horizontalen Abschnitt des Flansches Aussparungen, insbesondere Bohrungen, vorzusehen, durch welche die Spann- oder Zuglitzen geführt werden können. Alternativ oder ergänzend können auch die weiteren Turmsegmente - wenn vorhanden - L-förmige Kopf- und/oder Fußflansche aufweisen. Auch kann es vorgesehen sein, dass einige der mehreren Turmsegmente, insbesondere die Betonturmsegmente, hierbei keine L-förmigen Flansche aufweisen und dabei mit Turmsegmenten verbunden sind, die wiederum L-förmige Flansche aufweisen.

Eine bevorzugte Ausgestaltungsform betrifft eine Anordnung, bei welcher das Betonfundament und das unterste Turmsegment und/oder benachbarte Turmsegmente formschlüssig ineinandergreifen, gebildet sind. Hierbei umfassen beispielsweise Betonfundament und das unterste Turmsegment und/oder benachbarte Turmsegmente eine Art Nut und eine Feder, sodass sie formschlüssig ineinander angeordnet werden können. Dies ist insbesondere von Vorteil, wenn die Turmsegmente provisorisch aufeinander angeordnet werden, bevor sie endgültig mit den Zug- oder Spannlitzen verspannt werden, wobei lediglich das oberste Stahlelement, insbesondere der Kopfflansch des obersten Stahlelementes, über Spann- oder Zuglitzen mit dem Betonfundament verspannt sind.

Eine vorteilhafte Ausgestaltungsform betrifft eine Anordnung, bei welcher das Betonfundament und das unterste Turmsegment und/oder benachbarte Turmsegmente mittels lösbarer Verbindungsmittel verbindbar sind. Hierbei ist es insbesondere vorgesehen, dass Betonfundament und/oder Turmsegmente beispielsweise mittels Schrauben, Bolzen, Nieten provisorisch zu verbinden, bevor der Turm, insbesondere das Betonfundament und das oberste Turmsegment mittels der Spann- und/oder Zuglitzen verspannt wird.

Eine besonders vorteilhafte Ausgestaltungsform betrifft eine Anordnung, bei der die Spann- oder Zuglitzen jeweils einen Spannanker, der am Kopfflansch des obersten Turmsegmentes angeordnet ist, und einen Festanker, der am Betonfundament angeordnet ist, umfassen, wobei der Spannanker Angriffsmittel aufweist, die beim Betätigen die jeweilige Spann- oder Zuglitzen mit Zugspannung beaufschlagt.

Bei einer zweckmäßigen Ausgestaltungsform kann es vorgesehen sein, dass der Turm eine Höhe im Bereich zwischen 20 bis 150 Metern, bevorzugt von mindestens 70 Metern aufweist. Hierbei ist es in besonderer Weise vorgesehen, dass beispielsweise ein einziges Turmsegment mit einer Länge von im Wesentlichen 30 Metern oder zwei Turmsegmente mit einer Länge von im Wesentlichen 60 Metern für die Bildung eines Turmes entlang einer Turmachse auf dem Betonfundament angeordnet sind. Bevorzugt sind aber eine Anzahl von Turmsegmenten mit jeweils einer Längendimension von 10 bis 40 Metern, bevorzugt von 20 bis 30 Metern auf dem Betonfundament angeordnet. Im Wesentlichen bedeutet dabei, das Abweichung von +/- 2 m mit umfasst sind.

Ausführungsbeispiele der Erfindung werden nachfolgend anhand der Figuren im Vergleich zum Stand der Technik, welcher zum Teil ebenfalls dargestellt ist, beschrieben. Diese sollen die Ausführungsbeispiele nicht notwendigerweise maßstäblich darstellen, vielmehr sind die Figuren, wo zur Erläuterung dienlich, in schematisierter und / oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und / oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsbeispiele sowie anhand der Figuren.

Im Einzelnen zeigen:
- Fig. 1: eine schematische Darstellung einer bevorzugte Ausgestaltungsform einer Windenergieanlage;
- Fig. 2: eine schematische Darstellung einer bevorzugte Ausgestaltungsform einer Anordnung mit einem Turm und einem Fundament;
- Fig. 3: eine schematische Darstellung einer weiteren bevorzugten Ausgestaltungsform für eine Anordnung mit einem Turm und einem Fundament;
- Fig. 4: wiederum eine schematische Darstellung einer andere bevorzugten Ausgestaltungsform für eine Anordnung;
- Fig. 5: eine schematische Darstellung eines Ausführungsbeispiels für eine nicht zur Erfindung gehörigen Anordnung;
- Fig. 6: wiederum eine schematische Darstellung eines anderen bevorzugten Ausführungsbeispiels für eine Anordnung; und
- Fig. 7A bis 7C: drei schematische Darstellungen möglicher bevorzugter Ausgestaltungsformen für ein Betonfundament.

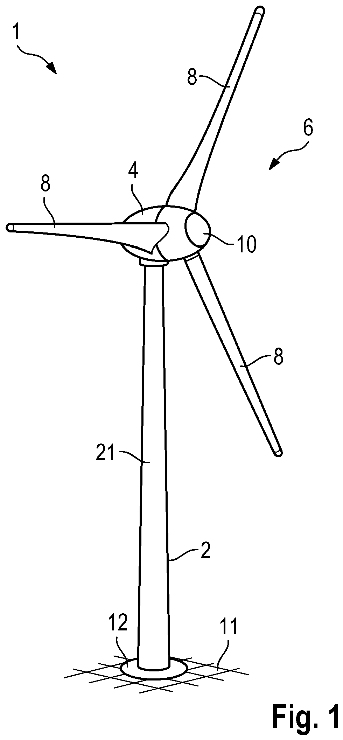

Fig. 1 zeigt beispielhaft eine Windenergieanlage 1 mit einem Turm 2 und einem Fundament, insbesondere einem Betonfundament 12, und einer Gondel 4. Das Betonfundament 12 ist dabei unterhalb der Erde angeordnet und schließt ebenerdig aber nicht notwendigerweise mit dem Grund 11 oder der Oberfläche des Bodens ab. Der Turm 2 ist mit einem einzigen oder mehreren Turmsegment(en) 21 gebildet, welches auf dem Betonfundament 12 angeordnet ist. Das Turmsegment 21 ist als ein Stahlelement gebildet. Das Stahlelement ist als eine zylinder- oder kegelförmiges hohles Turmsegment gebildet, und von Innen mit dem Betonfundament 12 verbunden.

An der Gondel 4 ist ein Rotor 6 mit drei Rotorblättern 8 und einem Spinner 10 angeordnet. Der Rotor 6 wird im Betrieb durch den Wind in eine Drehbewegung versetzt und treibt dadurch einen Generator (nicht dargestellt) im Inneren der Gondel 4 an. Mit Hilfe des Generators wird die mechanische Energie der Drehbewegung in elektrische Energie gewandelt und kann anschließend in ein Stromnetz eingespeist werden.

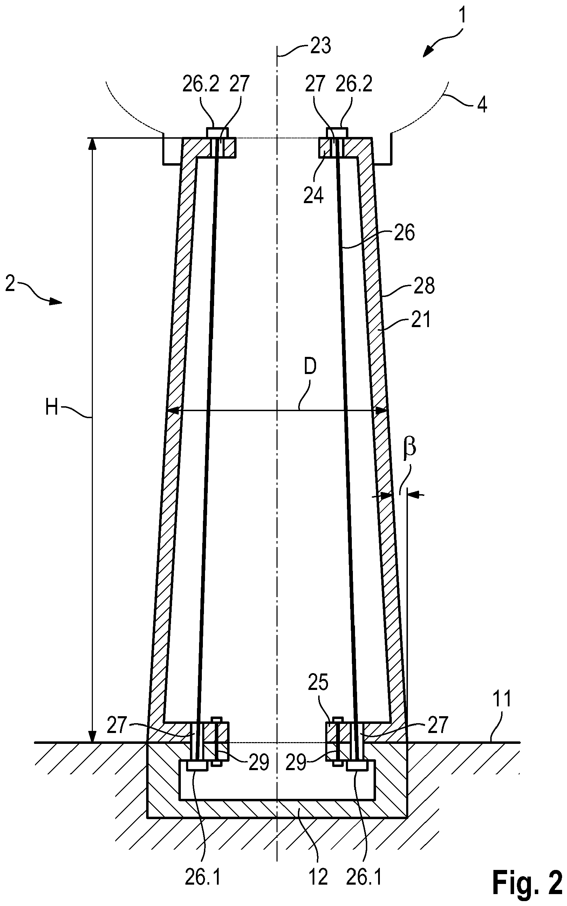

Fig. 2 zeigt ein Ausführungsbeispiel für eine Anordnung mit einem Fundament, insbesondere einem Betonfundament 12, und einem Turm 2 zum Tragen einer Gondel 4 einer Windenergieanlage 1. Der Turm 2 und das Betonfundament 12 sind im Querschnitt gezeigt, und bilden zusammen eine Trageanordnung, insbesondere eine kegelförmige, turmartige hohle Tragekonstruktion, für eine Gondel 4 (nur schematisch angedeutet) einer Windenergieanlage 1.

Vorliegend umfasst der Turm 2 ein einziges Turmsegment 21, das auf dem Betonfundament 12 und entlang einer Turmachse 23 angeordnet ist. Das Turmsegment 21 ist als ein kegelförmiges Stahlelement gebildet und umfasst einem Kopfflansch 24 und einem Fußflansch 25, wobei der Fußflansch 25 benachbart zum Betonfundament 12 und der Kopfflansch 24 benachbart zur Gondel 4 angeordnet ist. Das Turmsegment 21, insbesondere der Kopfflansch 24 des Turmsegmentes 21, ist über eine Anzahl von Spannoder Zuglitzen 26 mit dem Betonfundament 12 verspannt. Beispielsweise werden eine ein- oder zweistellige Anzahl von Spann- oder Zuglitzen 26 verwendet, um das Betonfundament 12 mit dem Kopfflansch 24 des Turmsegmentes 21 unter Zugspannung zu verspannen. Die Anzahl der Spann- oder Zuglitzen werden dabei umfänglich mit äquidistanten Abständen zu einander im Turm verteilt, so dass sich die Last gleichmäßig auf die jeweilige Anzahl von Spann- oder Zuglitzen verteilt.

Hierfür ist das Turmsegment 21 vorliegend mit einem L-förmigen Kopfflansch 24 und einem L-förmigen Fußflansch 25 gebildet, wobei in einem horizontalen Abschnitt des Kopfflansches 24 und des Fußflansches 25 Bohrungen 27 vorgesehen sind, durch welche die Spann- oder Zuglitzen geführt werden können. Die Spann- und Zuglitzen 26 sind jeweils mit einem Spannanker 26.2, welcher am Kopfflansch des Turmsegmentes 21 angeordnet ist, und mit einem Festanker 26.1, welcher am Betonfundament 12 angeordnet ist, gebildet. Hierbei weist der Spannanker Angriffsmittel auf, beispielsweise Schrauben oder Schraubköpfe, die bei einem Betätigen, insbesondere Drehen der Schrauben oder Schraubköpfe, die jeweilige Spann- oder Zuglitze 26 mit Zugspannung beaufschlagen.

Weiter ist das Turmsegment 21 kegelförmig ausgebildet, derart, dass sich ein Durchmesser D entlang der Turmachse 23 nach oben verkleinert, wobei eine Außenseite 28 des kegelförmigen Turmsegments 21 mit der Turmachse 23 einen Winkel β zwischen 1° und 10° einschließt. Bevorzugt ist hierbei ein Winkel von β = 2° und noch mehr bevorzugt von β = 1° vorgesehen.

Insgesamt weist der Turm eine Höhe H von mindestens 30 Metern auf. Beispielsweise kommt hierbei ein einziges Turmsegment 21 mit einer Länge von im Wesentlichen 30m zum Einsatz. In einer anderen Ausgestaltungsform kann der Turm auch mit zwei oder mehreren Turmsegmenten, jeweils mit einer Länge von im Wesentlichen 30m, gebildet sein. Im Wesentlichen bedeutet vorliegend, das Abweichung von +/- 2m hiervon umfasst sind.

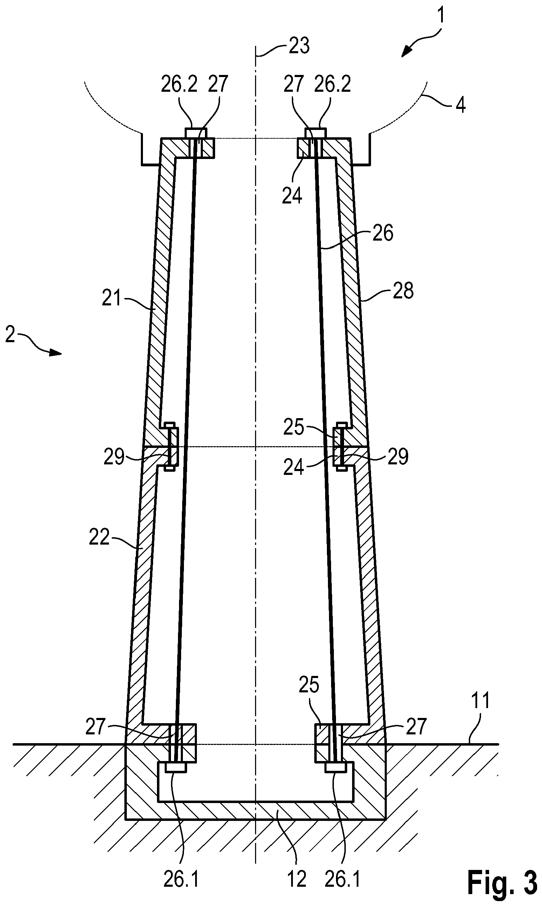

Fig. 3 zeigt eine weitere Ausgestaltungsform für eine Anordnung mit einem Fundament, insbesondere einem Betonfundament 12, und einem Turm 2 für eine Gondel 4 (nur schematisch angedeutet) einer Windenergieanlage 1, wobei identische oder ähnliche Teile oder Merkmale, mit gleichen Bezugszeichen wie in den vorhergehenden Figuren versehen sind.

Im Gegensatz zu der Anordnung, wie sie in der Fig. 2 gezeigt ist, ist die in der Fig. 3 dargestellte Anordnung, insbesondere der Turm 2, mehr als einem Turmsegment, insbesondere mit einem untersten Turmsegment 22 und einem obersten Turmsegment 21, gebildet, wobei beide Turmsegmente 22 und 21, insbesondere aber das oberste Turmsegment 21, als Stahlelement gebildet sind. Ohne Einschränkung der Erfindung können auch mehr als zwei Turmsegmente vorgesehen sein, beispielsweise drei, vier oder fünf Stahlturmsegmente.

Vorliegend umfassen beide Turmsegmente jeweils einen Kopfflansch 24 und einen Fußflansch 25. Das unterste Turmsegment 22 ist mit dem Fußflansch auf dem Betonfundament 12 angeordnet. Die beiden Turmsegmente 22 und 21 sind entlang einer Turmachse 23 übereinander angeordnet, wobei der Fußflansch 25 des obersten Turmsegmentes 21 auf dem Kopfflansch 24 des untersten Turmsegmentes 22 angeordnet ist.

Vorliegend ist das Betonfundament 12 mittels Spann- oder Zuglitzen 26 mit dem Kopfflansch des obersten Turmsegmentes 21 verspannt. Beispielsweise werden eine einoder zweistellige Anzahl von Spann- oder Zuglitzen 26 verwendet, um das Betonfundament 12 mit dem Kopfflansch 24 des obersten Turmsegmentes 21 unter Zugspannung zu verspannen. Die Spann- oder Zuglitzen 26 umfassen dabei jeweils einen Spannanker 26.2, welcher am Kopfflansch des Turmsegmentes 21 angeordnet ist, und einen Festanker, welcher im Betonfundament 12 angeordnet ist. Sowohl das oberste als auch das unterste Turmsegment 21, 22 sind dabei mit einem L-förmigen Kopf- und Fußflansch gebildet, die jeweils Bohrungen 27 aufweisen, durch welche die Spann- oder Zuglitzen 26 geführt werden können. Vorliegend sind die Spann- oder Zuglitzen 26 nur durch die Bohrungen 27 des Kopfflansches 24 des obersten Turmsegmentes 21 und durch den Fußflansch 25 des untersten Turmsegmentes 22 geführt. Alternativ oder ergänzend können die Spann- oder Zuglitzen 26 auch durch Bohrungen (nicht dargestellt) in den jeweils anderen Kopf- und/oder Fußflanschen geführt werden, beispielweise in der Mitte der Anordnung.

Die beiden Turmsegmente 21 und 22 und/oder das Betonfundament 12 können weiter mittels lösbarer Verbindungsmittel 29, wie z. B. Schrauben, Bolzen, Nieten, usw. (provisorisch) mit einander verbunden werden, so dass beim Errichten des Turms 2 zum Tragen einer Gondel 4 einer Windenergieanlage 1, die Turmsegmente 21 und 22 auf dem Betonfundament 12 provisorisch angeordnet und mittels der lösbaren Verbindungsmittel 29 verbunden werden können. Anschließend kann der Turm 2 dann mit den Spann- oder Zuglitzen 26 verspannt werden. Auch das Betonfundament 12 kann ergänzend mittels der Verbindungsmittel 29 mit dem untersten Turmsegment 22 provisorisch verbunden werden. Vorliegend sind die Verbindungsmittel 29 parallel zur Turmachse 23 angeordnet.

Alternativ oder ergänzend können auch Verbindungsmittel 29 vorgesehen sein, die senkrecht zur Turmachse 23 angeordnet sind.

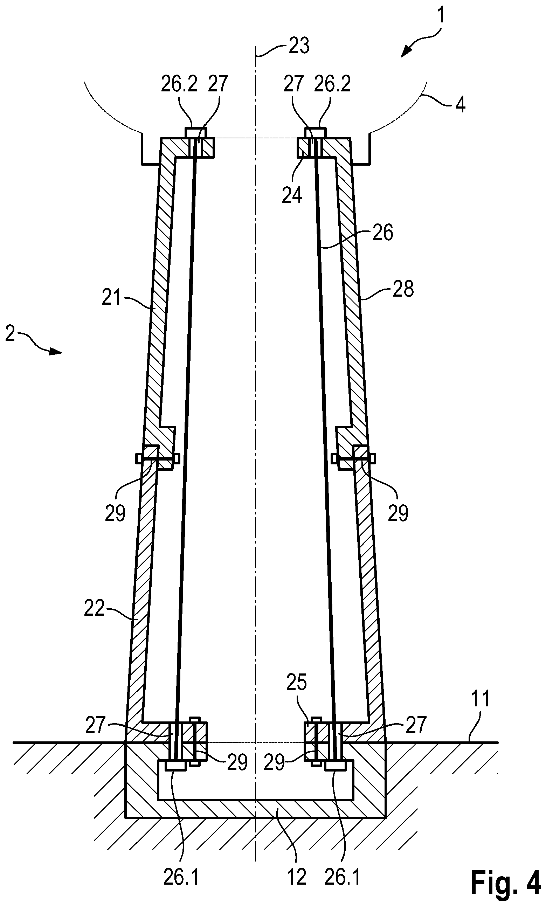

Fig. 4 zeigt wiederum ein anderes Ausführungsbeispiel für eine Anordnung mit einem Betonfundament 12 und einem Turm 2 für eine Gondel 4 einer Windenergieanlage 1. Wiederum werden für gleiche Merkmale gleiche Bezugszeichen verwendet.

Die in der Fig. 4 gezeigte Anordnung ist ähnlich zu den Anordnungen, wie sie bereits in den Fig. 2 und 3. dargestellt und beschrieben sind. Im Gegensatz zu vorangehenden Anordnungen, ist die Anordnung nach der Fig. 4 jedoch mit einem obersten und einem untersten Turmsegment gebildet, die formschlüssig ineinandergreifen. Das oberste Turmsegment 21 und das unterste Turmsegment 22 kann hierbei wiederum über lösbare Verbindungsmittel 29, insbesondere Schrauben, Bolzen, Nieten, verbunden werden. Hierbei umfassen die beiden benachbarten Turmsegmente 21, 22 beispielsweise auch eine Art Nut und Feder, sodass sie formschlüssig ineinander angeordnet werden können. Dies ist insbesondere von Vorteil, wenn die Turmsegmente provisorisch aufeinander angeordnet werden, bevor sie endgültig mit den Zug- oder Spannlitzen verspannt werden.

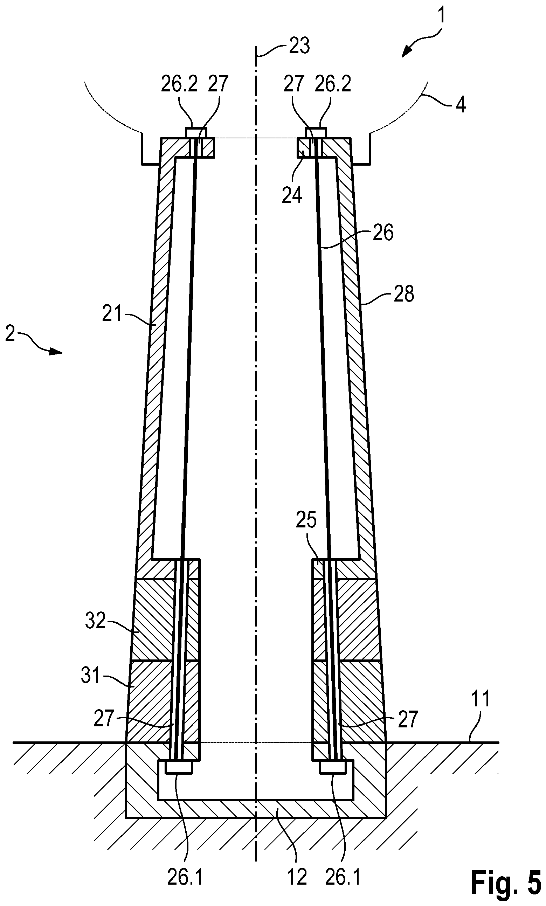

Fig. 5 zeigt eine weitere Ausgestaltungsform für eine Anordnung mit einem Betonfundament 12 und einem Turm 2 für eine Gondel 4 einer Windenergieanlage 1. Wiederum werden für gleiche Merkmale gleiche Bezugszeichen verwendet.

Die in der Fig. 5 gezeigte, nicht zur Erfindung gehörige Anordnung insbesondere der Turm 2, ist mit insgesamt drei Turmsegmenten gebildet. Hierbei sind vorliegend zwei Turmsegmente aus Beton entlang der Turmachse 23 auf dem Betonfundament 12 angeordnet. Ohne Einschränkung können auch mehr oder weniger Betonturmsegmente vorgesehen sein. Auf den beiden Betonsegmenten ist ein oberstes Turmsegment 21, welches als ein Stahlelement gebildet ist, angeordnet. Das Betonfundament 12 über eine Anzahl von Spann- oder Zuglitzen mit dem Kopfflansch des obersten Turmsegmentes 21, nämlich dem Stahlelement, verspannt.

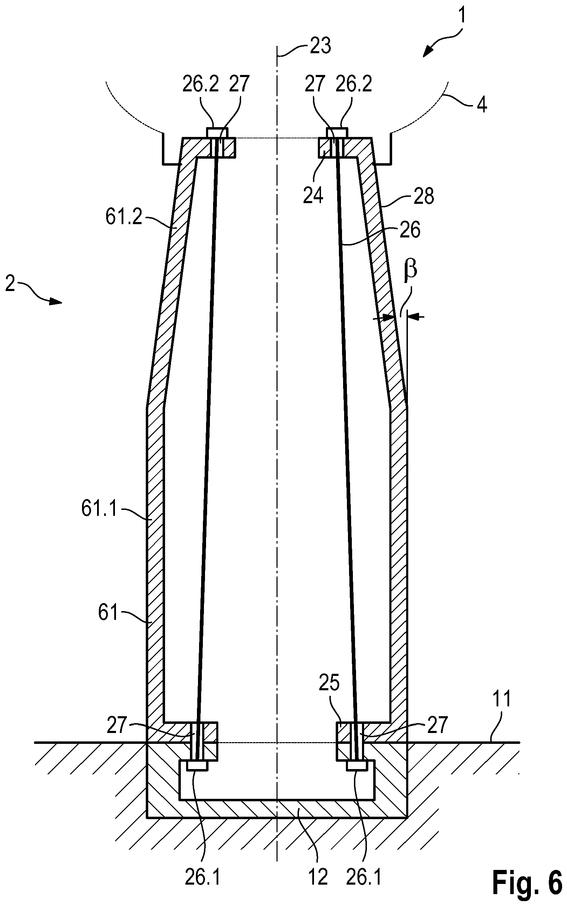

Fig. 6 zeigt wiederum ein anderes Ausführungsbeispiel für eine Anordnung mit einem Betonfundament 12 und einem Turm 2 für eine Gondel 4 einer Windenergieanlage 1, wobei auch hier für gleiche Merkmale gleiche Bezugszeichen verwendet werden.

Die in der Fig. 6 dargestellte Ausführungsform entspricht im Wesentlichen der Ausführungsform wie sie in der Fig. 1 dargestellt und beschrieben ist, nämlich eine Anordnung, insbesondere ein Turm 2 mit einem einzigen Turmsegment 61. Im Gegensatz zu der Anordnung, wie sie in der Fig. 1 dargestellt ist, ist die in der Fig. 6 dargestellte Ausführungsform mit einem Turmsegment 61 gebildet, welches mit einen zylinderförmigen Abschnitt 61.1 und einen kegelförmigen Abschnitt 61.2 gebildet ist. Hierbei ist das "geknickte" Turmsegment 61 mit dem zylinderförmigen Abschnitt 61.1 auf dem Betonfundament 12 und mit dem kegelförmigen Abschnitt 61.2 benachbart zur Gondel 4 angeordnet. Der kegelförmige Abschnitt 61.2 des Turmsegmentes 61, insbesondere die Oberfläche 28 des kegelförmigen Abschnittes 61.2 bildet mit der Turmachse 23 einen Winkel β. Der Winkel β zwischen der Außenseite 28 des Turmsegmentes 61 und der Turmachse 23 bildet bevorzugt einen Winkel zwischen 1° und 10°, bevorzugt von 5° und noch mehr bevorzugt von 2°.

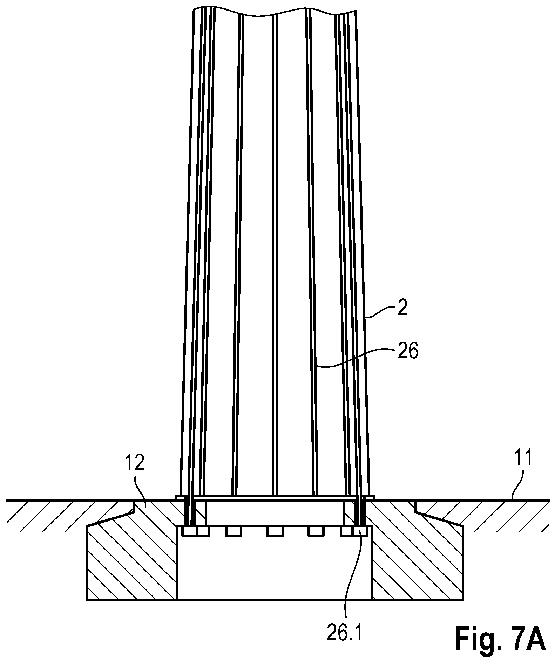

Die Fig. 7A bis Fig. 7C zeigen drei mögliche Ausgestaltungsform für ein Betonfundament 12, wobei in den Fig. 7A bis 7C für gleiche Merkmale gleiche Bezugszeichen verwendet werden. Dargestellt ist jeweils ein Betonfundament 12 und ein Turm 2, insbesondere ein unterstes Turmsegment. Das Betonfundament 12 ist mittels Spann- oder Zuglitzen mit dem Kopfflansch des obersten Turmsegmentes 21, einem Stahlelement, verspannt.

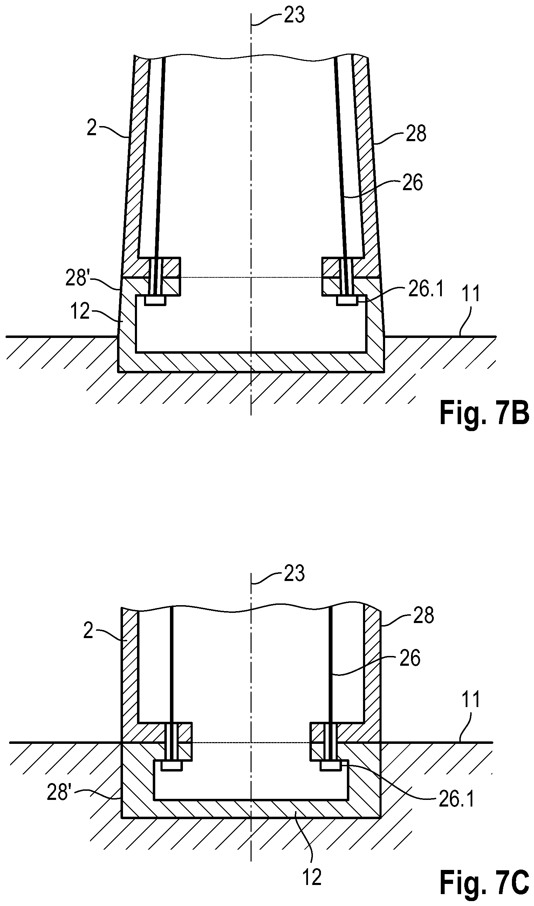

Fig. 7A zeigt eine Ausführungsform, bei welcher Betonfundament 12 unterhalb des Grundes 11 angeordnet ist. Es kann aber auch vorgesehen sein, dass das Betonfundament 12 nur teilweise unterhalb des Grundes 11, also unterirdisch, angeordnet ist, wie dies beispielswiese in der Fig. 7B und 7C gezeigt ist. Auch kann es vorgesehen sein, dass die Außenseite 28' des Betonfundaments 12 mit der Außenseite 28 des Turmes 2, insbesondere mit dem untersten Turmsegment, bündig abschließt, wobei ein Teil der Außenseite 28' des Betonfundaments 12 dann zylinderförmig (vgl. Fig. 7B und 7C) und/oder kegelförmig (vgl. Fig. 7C) gebildet ist.

## Patentansprüche

1. Anordnung mit einem Betonfundament (12) und einem Turm (2) zum Tragen einer Gondel (4) einer Windenergieanlage (1), wobei der Turm (2) eine Anzahl (i = 1, 2, ..., n) von Turmsegmenten (21, 22, 61) umfasst, die entlang einer Turmachse (23) angeordnet sind und zumindest ein oberstes Turmsegment (21, 61) einen Fußflansch (25) umfasst, **dadurch gekennzeichnet, dass**
- zumindest das oberste Turmsegment (21, 61) einen Kopfflansch (24) umfasst, und
- das oberste Turmsegment (21, 61) der Anzahl von Turmsegmenten (21, 22, 61) als ein Stahlelement gebildet ist, wobei der Turm (2) ausschließlich aus einem oder mehreren Stahlelementen jeweils als Stahl-Turmsegment (21, 22, 61) gebildet ist, sodass ein Stahlturm gebildet ist;
- eine Anzahl (j) von Spann- oder Zuglitzen (26) das Betonfundament (12) mit dem Kopfflansch (24) des obersten Turmsegmentes (21, 61) unter Zugspannung verspannt.

2. Anordnung nach Anspruch 1, **dadurch gekennzeichnet, dass** die Anzahl von Turmsegmenten ein einziges (i = 1) Turmsegment (21, 61) umfasst, das mit dem Fußflansch (25) auf dem Betonfundament (12) angeordnet ist.

3. Anordnung nach Anspruch 1, **dadurch gekennzeichnet, dass** die Anzahl von Turmsegmenten mehrere (i ≥ 2) Turmsegmente (21, 22) umfasst, die entlang der Turmachse (23) übereinander auf dem Betonfundament (12) angeordnet sind.

4. Anordnung nach zumindest einem der Ansprüche 1 bis 3, **dadurch gekennzeichnet, dass** die Anzahl (j) Spann- oder Zuglitzen (26) das Betonfundament (12) mit dem Kopfflansch (24) des obersten Turmsegmentes (21, 61) unter Zugspannung verspannen und die jeweiligen Spann- oder Zuglitzen (26) mit äquidistanten Abständen zueinander verteilt sind.

5. Anordnung nach Anspruch 4, **dadurch gekennzeichnet, dass** zehn (j = 10), bevorzugt sieben (j = 7) und noch mehr bevorzugt fünf (j = 5), Spann- oder Zuglitzen (26) das Betonfundament (12) mit dem Kopfflansch (24) des obersten Turmsegmentes (21, 61) unter Zugspannung verspannen.

6. Anordnung nach zumindest einem der Ansprüche 1 bis 5, **dadurch gekennzeichnet, dass** der Kopfflansch (24) und/oder der Fußflansch (25) zumindest eines der Turmsegmente (21, 22, 61) Bohrungen (27) umfasst.

7. Anordnung nach zumindest einem der Ansprüche 1 bis 6, **dadurch gekennzeichnet, dass** ein Durchmesser (D) mindestens eines der Turmsegmente (21, 22, 61) sich entlang der Turmachse (23) nach oben verkleinert, wobei zumindest ein Teil der Außenseite (28) des Turmsegmentes mit der Turmachse (23) einen Winkel (β) zwischen 1° und 10° einschließt.

8. Anordnung nach einem der Ansprüche 1 bis 7, **dadurch gekennzeichnet, dass** zumindest der Kopfflansch (24) und/oder der Fußflansch (25) des obersten Turmsegmentes (21, 61) L-förmig gebildet ist.

9. Anordnung nach zumindest einem der Ansprüche 1 bis 8, **dadurch gekennzeichnet, dass** zumindest der Kopfflansch (24) und/oder der Fußflansch (25) des obersten Turmsegmentes (21, 61) T-förmig gebildet ist.

10. Anordnung nach zumindest einem der Ansprüche 1 bis 9, **dadurch gekennzeichnet, dass**
- das Betonfundament (12) und das unterste Turmsegment (21, 22, 61) und/oder benachbarte Turmsegmente (21, 22) formschlüssig ineinandergreifend gebildet sind, und/oder
- das Betonfundament (12) und das unterste Turmsegment (21, 22, 61) und/oder benachbarte Turmsegmente (21, 22) mittels lösbarer Verbindungsmittel (29) provisorisch verbindbar sind.

11. Anordnung nach zumindest einem der Ansprüche 1 bis 10, **dadurch gekennzeichnet, dass** die Spann- oder Zuglitzen (26) jeweils einem Spannanker (26.2), der am Kopfflansch (24) des obersten Turmsegmentes (21, 22, 61) angeordnet ist, und einem Festanker (26.1), der am Betonfundament (12) angeordnet ist, umfassen, wobei der Spannanker (26.2) Angriffsmittel aufweist, die bei Betätigung die jeweilige Spann- oder Zuglitze (26) mit Zugspannung beaufschlagt.

12. Anordnung nach zumindest einem der vorangehenden Ansprüche, **dadurch gekennzeichnet, dass** der Turm (1) eine Höhe (H) von mindestens 70m aufweist.

13. Verfahren zum Errichten eines Turms (2) zum Tragen einer Gondel (4) einer Windenergieanlage (1), umfassend die folgenden Schritte:
- Aufsetzen eines ersten Turmsegmentes einer Anzahl von Turmsegmenten (21, 22, 61) auf einem Betonfundament (12);
- provisorisches Verbinden des Betonfundamentes (12) und des ersten Turmsegmentes mittels lösbarer Verbindungsmittel (29);
- optional Aufsetzen mindestens eines weiteren Turmsegmentes auf das erste Turmsegment und provisorisches Verbinden des ersten Turmsegmentes mittels lösbarer Verbindungsmittel (29) mit dem weiteren Turmsegment, vor einem Verspannen;
- Verspannen des Betonfundamentes (12) mit dem obersten Turmsegment der Anzahl von Turmsegmenten (21, 61) mittels einer Anzahl von Spann- oder Zuglitzen (26), **dadurch gekennzeichnet, dass**
- die Spann- oder Zuglitzen das Betonfundament und den Kopfflansch des obersten Turmsegmentes verbinden, und das oberste Turmsegment (21, 61) der Anzahl von Turmsegmenten (21, 22, 61) als ein Stahlelement gebildet ist, wobei der Turm (2) ausschließlich aus einem oder mehreren Stahlelementen jeweils als Stahl-Turmsegment (21, 22, 61) gebildet ist, sodass ein Stahlturm gebildet wird.

14. Windenergieanlage (1) mit einem Turm (2), einem Betonfundament (12) und einer Gondel (4), wobei an der Gondel ein Rotor (6) mit drei Rotorblättern (8) angeordnet ist, und der Rotor (6) im Betrieb der Windenergieanlage (1) durch Wind eine Drehbewegung ausführt und einen Generator antreibt, **dadurch gekennzeichnet, dass** der Turm (2) und das Betonfundament (12) eine Anordnung nach zumindest einem der Ansprüche 1 bis 12 bilden, wobei der Turm (2) ausschließlich aus einem oder mehreren Stahlelementen jeweils als Stahl-Turmsegment (21, 22, 61) gebildet ist, sodass ein Stahlturm gebildet ist.

## Claims

1. Arrangement having a concrete foundation (12) and a tower (2) for carrying a pod (4) of a wind turbine (1), wherein the tower (2) comprises a number (i = 1, 2, ..., n) of tower segments (21, 22, 61) which are arranged along a tower axis (23) and at least one uppermost tower segment (21, 61) comprises a base flange (25),
**characterised in that**
- at least the uppermost tower segment (21, 61) comprises an upper flange (24), and
- the uppermost tower segment (21, 61) of the number of tower segments (21, 22, 61) is formed as a steel element, wherein the tower (2) is formed exclusively from one or more steel elements in each case as a steel tower segment (21, 22, 61) so that a steel tower is formed;
- a number (j) of tensioning or drawing wires (26) tension the concrete foundation (12) with respect to the upper flange (24) of the uppermost tower segment (21, 61) under tensile stress.

2. Arrangement according to claim 1, **characterised in that** the number of tower segments comprises a single (i = 1) tower segment (21, 61) which is arranged with the base flange (25) on the concrete foundation (12).

3. Arrangement according to claim 1, **characterised in that** the number of tower segments comprises a plurality (i ≥ 2) of tower segments (21, 22) which are arranged along the tower axis (23) one above the other on the concrete foundation (12).

4. Arrangement according to at least one of claims 1 to 3, **characterised in that** the number (j) of tensioning or drawing wires (26) tension the concrete foundation (12) with respect to the upper flange (24) of the uppermost tower segment (21, 61) under tensile stress, and the respective tensioning or drawing wires (26) are distributed with equidistant spacing from each other.

5. Arrangement according to claim 4, **characterised in that** ten (j = 10), preferably seven (j = 7) and even more preferably five (j = 5) tensioning or drawing wires (26) tension the concrete foundation (12) with respect to the upper flange (24) of the uppermost tower segment (21, 61) under tensile stress.

6. Arrangement according to at least one of claims 1 to 5, **characterised in that** the upper flange (24) and/or the base flange (25) of at least one of the tower segments (21, 22, 61) comprises holes (27).

7. Arrangement according to at least one of claims 1 to 6, **characterised in that** a diameter (D) of at least one of the tower segments (21, 22, 61) decreases along the tower axis (23) in an upward direction, wherein at least a portion of the outer side (28) of the tower segment forms with the tower axis (23) an angle (β) between 1° and 10°.

8. Arrangement according to any one of claims 1 to 7, **characterised in that** at least the upper flange (24) and/or the base flange (25) of the uppermost tower segment (21, 61) is formed in an L-shaped manner.

9. Arrangement according to at least one of claims 1 to 8, **characterised in that** at least the upper flange (24) and/or the base flange (25) of the uppermost tower segment (21, 61) is formed in a T-shaped manner.

10. Arrangement according to at least one of claims 1 to 9, **characterised in that**
- the concrete foundation (12) and the lowest tower segment (21, 22, 61) and/or adjacent tower segments (21, 22) are formed so as to engage one in the other in a positive-locking manner and/or
- the concrete foundation (12) and the lowest tower segment (21, 22, 61) and/or adjacent tower segments (21, 22) can be connected to each other in a provisional manner by means of releasable connection means (29).

11. Arrangement according to at least one of claims 1 to 10, **characterised in that** the tensioning or drawing wires (26) each comprise a strain anchor (26.2) which is arranged on the upper flange (24) of the uppermost tower segment (21, 22, 61) and a fixed anchor (26.1) which is arranged on the concrete foundation (12), wherein the strain anchor (26.2) has engagement means which when actuated acts on the respective tensioning or drawing wire (26) with tensile stress.

12. Arrangement according to at least one of the preceding claims, **characterised in that** the tower (1) has a height (H) of at least 70 m.

13. Method for erecting a tower (2) for carrying a pod (4) of a wind turbine (12), comprising the following steps of:
- placing a first tower segment of a number of tower segments (21, 22, 61) on a concrete foundation (12);
- provisionally connecting the concrete foundation (12) and the first tower segment using releasable connection means (29) ;
- optionally placing at least one additional tower segment on the first tower segment and provisionally connecting the first tower segment using releasable connection means (29) to the additional tower segment, prior to tensioning,
- tensioning the concrete foundation (12) with respect to the uppermost tower segment of the number of tower segments (21, 61) using a number of tensioning or drawing wires (26), **characterised in that**
- the tensioning or drawing wires connect the concrete foundation and the upper flange of the uppermost tower segment, and the uppermost tower segment (21, 61) of the number of tower segments (21, 22, 61) is formed as a steel element, wherein the tower (2) is formed exclusively from one or more steel elements in each case as a steel tower segment (21, 22, 61) so that a steel tower is formed.

14. Wind turbine (1) having a tower (2), a concrete foundation (12) and a pod (4), wherein a rotor (6) with three rotor blades (8) is arranged on the pod and the rotor (6) during operation of the wind turbine (1) using wind carries out a rotational movement and drives a generator, **characterised in that** the tower (2) and the concrete foundation (12) form an arrangement according to at least one of claims 1 to 12, wherein the tower (2) is formed exclusively from one or more steel elements in each case as a steel tower segment (21, 22, 61) so that a steel tower is formed.

## Revendications

1. Ensemble comprenant une fondation en béton (12) et une tour (2) servant à supporter une nacelle (4) d'une éolienne (1), dans lequel la tour (2) comprend un nombre (i = 1, 2, ..., n) de segments de tour (21, 22, 61), qui sont disposés le long d'un axe de tour (23) et au moins un segment de tour le plus haut (21, 61) comprend une bride de pied (25),
**caractérisé en ce que** :
- au moins le segment de tour le plus haut (21, 61) comprend une bride de tête (24), et
- le segment de tour le plus haut (21, 61) du nombre de segments de tour (21, 22, 61) est réalisé en tant qu'un élément en acier, dans lequel la tour (2) est réalisée exclusivement à partir d'un ou de plusieurs éléments en acier chacun en tant que segment de tour en acier (21, 22, 61) de sorte qu'une tour en acier est réalisée ;
- un nombre (j) de torons de serrage ou de traction (26) assemble par serrage la fondation en béton (12) à la bride de tête (24) du segment de tour le plus haut (21, 61) avec un serrage de traction.

2. Ensemble selon la revendication 1, **caractérisé en ce que** le nombre de segments de tour comprend un segment de tour (21, 61) unique (i = 1), qui est disposé avec la bride de pied (25) sur la fondation en béton (12).

3. Ensemble selon la revendication 1, **caractérisé en ce que** le nombre de segments de tour comprend plusieurs (i ≥ 2) segments de tour (21, 22), qui sont disposés le long de l'axe de tour (23) les uns au-dessus des autres sur la fondation en béton (12).

4. Ensemble selon au moins l'une quelconque des revendications 1 à 3, **caractérisé en ce que** le nombre (j) de torons de serrage ou de traction (26) relie par serrage la fondation en béton (12) à la bride de tête (24) du segment de tour le plus haut (21, 61) avec un serrage de traction et les torons de serrage ou de traction (26) respectifs sont répartis les uns par rapport aux autres à des intervalles équidistants.

5. Ensemble selon la revendication 4, **caractérisé en ce que** dix (j = 10), de manière préférée sept (j = 7) et de manière encore plus préférée cinq (j = 5) torons de serrage ou de traction (26) assemblent par serrage la fondation en béton (12) à la bride de tête (24) du segment de tour le plus haut (21, 61) avec un serrage de traction.

6. Ensemble selon au moins l'une quelconque des revendications 1 à 5, **caractérisé en ce que** la bride de tête (24) et/ou la bride de pied (25) d'au moins un des segments de tour (21, 22, 61) comprend des alésages (27).

7. Ensemble selon au moins l'une quelconque des revendications 1 à 6, **caractérisé en ce qu'**un diamètre (D) d'au moins un des segments de tour (21, 22, 61) se rétrécit le long de l'axe de tour (23) vers le haut, dans lequel au moins une partie du côté extérieur (28) du segment de tour forme avec l'axe de tour (23) un angle (β) entre 1° et 10°.

8. Ensemble selon au moins l'une quelconque des revendications 1 à 7, **caractérisé en ce qu'**au moins la bride de tête (24) et/ou la bride de pied (25) du segment de tour le plus haut (21, 61) est formée en forme de L.

9. Ensemble selon au moins l'une quelconque des revendications 1 à 8, **caractérisé en ce qu'**au moins la bride de tête (24) et/ou la bride de pied (25) du segment de tour le plus haut (21, 61) est formée en forme de T.

10. Ensemble selon au moins l'une quelconque des revendications 1 à 9, **caractérisé en ce que**
- la fondation en béton (12) et le segment de tour le plus bas (21, 22, 61) et/ou des segments de tour (21, 22) adjacents sont formés de manière à s'imbriquer les uns dans les autres par complémentarité de forme, et/ou
- la fondation en béton (12) et le segment de tour le plus bas (21, 22, 61) et/ou des segments de tour (21, 22) adjacents peuvent être reliés provisoirement au moyen de moyens de liaison (29) amovibles.

11. Ensemble selon au moins l'une quelconque des revendications 1 à 10, **caractérisé en ce que** les torons de serrage ou de traction (26) comprennent respectivement un ancrage de serrage (26.2), qui est disposé au niveau de la bride de tête (24) du segment de tour le plus haut (21, 22, 61), et un ancrage fixe (26.1), qui est disposé au niveau de la fondation en béton (12), dans lequel l'ancrage de serrage (26.2) présente des moyens de mise en prise, qui soumettent lors de l'actionnement le toron de serrage ou de traction (26) respectif à l'action d'un serrage de traction.

12. Ensemble selon au moins l'une quelconque des revendications précédentes, **caractérisé en ce que** la tour (1) présente une hauteur (H) d'au moins 70 m.

13. Procédé servant à ériger une tour (2) servant à supporter une nacelle (4) d'une éolienne (1), comprenant les étapes suivantes :
- placement d'un premier segment de tour d'un nombre de segments de tour (21, 22, 61) sur une fondation en béton (12) ;
- liaison provisoire de la fondation en béton (12) et du premier segment de tour au moyen de moyens de liaison (29) amovibles ;
- en option placement d'au moins un autre segment de tour sur le premier segment de tour et liaison provisoire du premier segment de tour au moyen de moyens de liaison (29) amovibles à l'autre segment de tour, avant un assemblage par serrage ;
- assemblage par serrage de la fondation en béton (12) au segment de tour le plus haut du nombre de segments de tour (21, 61) au moyen d'un nombre de torons de serrage ou de traction (26), **caractérisé en ce que**
- les torons de serrage ou de traction relient la fondation en béton et la bride de tête du segment de tour le plus haut, et le segment de tour le plus haut (21, 61) du nombre de segments de tour (21, 22, 61) est réalisé en tant qu'un élément en acier, dans lequel la tour (2) est réalisée exclusivement à partir d'un ou de plusieurs éléments en acier chacun en tant que segment de tour en acier (21, 22, 61) de sorte qu'une tour en acier est réalisée.

14. Éolienne (1) avec une tour (2), une fondation en béton (12) et une nacelle (4), dans laquelle un rotor (6) avec trois pales de rotor (8) est disposé au niveau de la nacelle et le rotor (6) exécute lors du fonctionnement de l'éolienne (1) du fait du vent un mouvement de rotation et entraîne un générateur, **caractérisée en ce que** la tour (2) et la fondation en béton (12) forment un ensemble selon au moins l'une quelconque des revendications 1 à 12, dans laquelle la tour (2) est réalisée exclusivement à partir d'un ou de plusieurs éléments en acier chacun en tant que segment de tour en acier (21, 22, 61) de sorte qu'une tour en acier est réalisée.
